# EUROPEAN PATENT APPLICATION

(11) **EP 4 804 319 A1**
(43) Date of publication of application: **09.09.2026**
(21) Application number: 24887392.9
(22) Date of filing: 14.06.2024
(51) Int. Cl.: H01M 50/474, H01M 50/30, H01M 50/40

(54) **BATTERY CELL, BATTERY, AND ELECTRIC DEVICE**

(30) Priority: 06.11.2023 CN 202322989179 U
(71) Applicant: Contemporary Amperex Technology Co., Limited, Ningde, Fujian 352100 (CN)
(72) Inventor: CHEN, Yongai, Ningde, Fujian 352100 (CN); YANG, Longfei, Ningde, Fujian 352100 (CN); YANG, Limei, Ningde, Fujian 352100 (CN)
(74) Representative: Gong, Jinping
(86) International application number: PCT/CN2024/099313
(87) International publication number: WO 2025/097768

(57) **Abstract**

A battery cell (10) is provided. The battery cell (10) includes a housing (1), a pressure relief mechanism (6), an electrode assembly (2), and a separator (7). The housing (1) has a first wall (111). The pressure relief mechanism (6) is provided on the housing (1). The electrode assembly (2) is provided in the housing (1). The separator (7) is provided between the electrode assembly (2) and the first wall (111), the separator (7) is configured to separate the electrode assembly (2) and the first wall (111), and the separator (7) is provided with an exhaust passage (8). The exhaust passage (8) is configured to guide gas in the battery cell (10) to the pressure relief mechanism (6). The separator (7) includes a first portion (711) and a second portion (712). A melting point of the first portion (711) is higher than a melting point of the second portion (712). At least a portion of the exhaust channel (8) is defined by the first portion (711). The battery cell (10) reduces the risk that gas in the battery cell (10) is hindered from flowing to the pressure relief mechanism (6) due to melting of the separator (7) melting caused by thermal runaway of the battery cell (10), thereby improving the reliability of batteries.

## Description

### CROSS-REFERENCE TO RELATED APPLICATIONS

This application claims priority to Chinese Patent Application No. 202322989179.5, filed on November 6, 2023 and entitled "BATTERY CELL, BATTERY, AND ELECTRIC DEVICE", which is incorporated herein by reference in its entirety.

### TECHNICAL FIELD

This application relates to the field of battery technologies, and in particular, to a battery cell, a battery, and an electric device.

### BACKGROUND

Most commonly used batteries in vehicles are lithium-ion batteries. As rechargeable batteries, the lithium-ion batteries have advantages such as small size, high energy density, high power density, long cycle life, and long storage time.

A battery cell generally includes a housing and an electrode assembly. The housing is used for accommodating the electrode assembly and an electrolyte. The electrode assembly generally includes a positive electrode plate and a negative electrode plate, and electrical energy is generated through migration of metal ions (for example, lithium ions) between the positive electrode plate and the negative electrode plate.

For general battery cells, during the use of battery cells, thermal runaway of the battery cells leads to sharp increase in temperature and swelling of batteries, posing risks of explosion and fire for the batteries. How the reliability of battery cells is improved is an urgent problem that needs to be solved in battery technologies.

### SUMMARY

This application provides a battery cell, a battery, and an electric device to improve the reliability of the battery cell.

According to a first aspect, an embodiment of this application provides a battery cell. The battery cell includes a housing, a pressure relief mechanism, an electrode assembly, and a separator. The housing has a first wall. The pressure relief mechanism is provided on the housing. The electrode assembly is provided in the housing. The separator is provided between the electrode assembly and the first wall, the separator is configured to separate the electrode assembly and the first wall, and the separator is provided with an exhaust passage. The exhaust passage is configured to guide gas in the battery cell to the pressure relief mechanism. The separator includes a first portion and a second portion. A melting point of the first portion is higher than a melting point of the second portion. At least a portion of the exhaust passage is defined by the first portion.

In the foregoing battery cell, the separator is located between the electrode assembly and the first wall of the housing, and the separator is provided with the exhaust passage for guiding gas in the battery cell to the pressure relief mechanism. Considering that the melting point of the first portion of the separator is higher than the melting point of the second portion of the separator, when thermal runaway occurs in the battery cell, the following may occur: if the melting point of the second portion is insufficient for withstanding the high temperature during thermal runaway and the melting point of the first portion is sufficient for withstanding the high temperature during thermal runaway, after the second portion melts, the first portion can remain between the electrode assembly and the first wall, and since at least a portion of the exhaust passage is defined by the first portion, during melting of the second portion and within a period of time after the second portion completely melts, the exhaust passage defined by the first portion can maintain guiding gas in the battery cell to the pressure relief mechanism; if the melting points of neither the second portion nor the first portion are sufficient for withstanding the high temperature during thermal runaway, the first portion still melts later than the second portion, and during the process where the second portion melts first, the exhaust passage defined by the first portion can provide a passage for gas in the battery cell in thermal runaway to flow to the pressure relief mechanism, reducing the risk of battery explosion; and if both the first portion and the second portion can withstand the high temperature inside the battery cell during thermal runaway, the exhaust passage can always maintain guiding gas in the battery cell to the pressure relief mechanism. In this way, in the case that the melting point of the first portion is higher than the melting point of the second portion on the separator, the separator helps to guide gas to the pressure relief mechanism in a timely manner when thermal runaway occurs in the battery cell, reducing the risk that gas in the battery cell is hindered from flowing to the pressure relief mechanism due to melting of the separator caused by thermal runaway, thereby improving the reliability of batteries.

In some embodiments, the melting point of the first portion is higher than 300 degrees Celsius. The first portion with the melting point higher than 300 degrees Celsius is used to define at least a portion of the exhaust passage, so that when thermal runaway occurs in the battery cell, the first portion is not prone to melting caused by thermal runaway, and therefore the first portion can maintain at least a portion of the exhaust passage to continue guiding gas in the battery cell to the pressure relief mechanism, reducing the risk of explosion and fire of the battery cell due to the gas in the battery cell not being able to be guided to the pressure relief mechanism.

In some embodiments, a material of the first portion is metal, ceramic, or mica. The material with a higher melting point allows the first portion to maintain its original state when thermal runaway occurs in the battery cell, thereby keeping at least a portion of the exhaust passage unobstructed.

In some embodiments, the second portion is an insulating material. The second portion being an insulating material helps the separator insulate and isolate the electrode assembly from the first wall.

In some embodiments, a material of the second portion is polyethylene, polyimide, polyethylene terephthalate, or polycarbonate. The second portion being the foregoing materials allows the second portion to melt when thermal runaway occurs, increasing the gas accommodating space between the electrode assembly and the first wall.

In some embodiments, in a thickness direction of the first wall, a projected area of the first portion is smaller than a projected area of the separator. The projected area of the first portion is set to be smaller than the projected area of the separator, so that at least a portion of a projection of the separator in the thickness direction of the first wall is defined by the first portion, and when the second portion melts due to its insufficient melting point for withstanding the high temperature of thermal runaway, the remaining first portion of the separator can have larger exhaust space, improving the exhaust capability of the space between the electrode assembly and the first wall.

In some embodiments, in the thickness direction of the first wall, at least a portion of a projection of the pressure relief mechanism does not overlap with a projection of the first portion. The projection of the pressure relief mechanism is set to not overlap with the projection of the first portion, that is, no position of the first portion is in contact with the pressure relief mechanism, so that when thermal runaway occurs, the first portion can remain between the first wall and the electrode assembly, reducing the risk that the first portion is discharged out of the pressure relief mechanism with the airflow, thereby allowing the first portion to stay between the first wall and the electrode assembly to keep the exhaust passage unobstructed, and the first portion is not disposed on the pressure relief mechanism, reducing the risk that the first portion blocks the pressure relief mechanism and affects the normal exhaust of the pressure relief mechanism.

In some embodiments, the housing has a second wall provided adjacent to the first wall, the separator is plate-shaped, and a first gap is formed between an edge of the separator and an inner surface of the second wall; and the exhaust passage includes a first exhaust passage, where the first exhaust passage extends to the edge of the separator to communicate the first gap with the pressure relief mechanism, and the first portion defines the first exhaust passage. The first gap provided between the separator and the second wall and the first exhaust passage extending to the edge of the separator communicating with the first gap allow gas in the battery cell to enter the first exhaust passage through the first gap, and thus be guided to the pressure relief mechanism through the first exhaust passage, which realizes guiding the gas inside the battery cell to the pressure relief mechanism, reducing the risk that gas inside the battery cell cannot be guided to the pressure relief mechanism.

In some embodiments, the second portion includes a first plate body, the first plate body has a first surface facing the first wall, the first portion includes a plurality of support members, and the plurality of support members are spaced apart from each other on the first surface. The plurality of support members of the first portion are located between the first plate body and the first wall, the plurality of support members are spaced apart from each other, and exhaust gaps are formed between the plurality of support members to facilitate the exhaust of the separator, so that when the second portion melts due to heat, the first portion can maintain the support for the electrode assembly and the first wall to keep the exhaust passage unobstructed.

In some embodiments, the second portion further includes a second plate body, the second plate body is disposed on a side of the first plate body facing the first wall, and the plurality of support members are disposed between the first plate body and the second plate body and connect the first plate body and the second plate body. The first plate body and the second plate body provided on two sides of the support member respectively allow for more stable structure of the support member, so that when thermal runaway occurs, the separator can form a more stable exhaust passage, reducing the risk that the support member collapses or shifts due to unstable setting of the support member, which otherwise affects the unobstructed flow in the exhaust passage.

In some embodiments, the exhaust passage further includes a first through hole provided in the second plate body, the first through hole penetrates the second plate body along a thickness direction, the first through hole corresponds in position to the pressure relief mechanism, and the first through hole communicates with the first exhaust passage. The first through hole is set as corresponding to the pressure relief mechanism, so that when airflow in the battery cell passes through the exhaust passage, the airflow can flow to the pressure relief mechanism through the first through hole, thereby reducing the risk that the second plate body blocks the pressure relief mechanism.

In some embodiments, the support members are support plates, the plurality of support plates are spaced apart along a first direction perpendicular to the thickness direction of the first wall, a cavity is formed between adjacent two of the support plates, the support members are provided with second through holes, the second through holes communicate with the cavities, and the second through holes and the cavities form the first exhaust passage. The first through hole provided in the support member allows the second through holes to communicate with the cavities, so that gas in the battery cell can flow to the pressure relief mechanism through circulation in the first through hole and the cavities, thus reducing the risk of obstruction to gas circulation inside the battery cell.

In some embodiments, a side of the first plate body facing the second plate body and/or a side of the second plate body facing the first plate body is provided with slots, and at least one end of the support plate is embedded in the slot. At least one end of the support plate being embedded in the slot allows for more stable installation of the support plate, reducing the risk that the exhaust passage is blocked due to displacement or collapse of the support plate.

In some embodiments, the exhaust passage further includes third through holes provided in the first plate body, the third through hole penetrates the first plate body in a thickness direction of the first plate body, and the third through hole communicates with the first exhaust passage. Gas in the electrode assembly and in contact with a surface of the first plate body to pass through can enter the first exhaust passage through the third through holes, increasing the paths for gas to enter the first exhaust passage and reducing the risk that gas in the battery cell is hindered from flowing to the pressure relief mechanism.

In some embodiments, the pressure relief mechanism is provided on the first wall. The pressure relief mechanism is provided on the first wall, and the separator is located between the electrode assembly and the pressure relief mechanism, so that when thermal runaway occurs, the first portion of the separator keeps the exhaust passage between the pressure relief mechanism and the electrode assembly unobstructed, thereby realizing guiding gas in the battery cell to the pressure relief mechanism.

In some embodiments, the battery cell includes electrode terminals, the housing has a second wall provided adjacent to the first wall, and the electrode terminals are provided on the second wall. The electrode terminals provided adjacent to the pressure relief mechanism can reduce the influence of the pressure relief mechanism on the electrode terminals during pressure relief.

In some embodiments, the battery cell includes electrode terminals, the housing has a third wall provided opposite the first wall, and the electrode terminals are provided on the third wall. The electrode terminals provided opposite the pressure relief mechanism can reduce the influence of the pressure relief mechanism on the electrode terminals during pressure relief.

In some embodiments, the first wall is disposed facing downward when the battery cell is placed in an electric device or a battery. The pressure relief mechanism disposed facing downward allows for downward exhaust of the pressure relief mechanism, so that when the battery cell is applied to the electric device or the battery, the influence of the pressure relief mechanism during pressure relief on other components located above the pressure relief mechanism is reduced.

In some embodiments, the housing includes a housing body and an end cover, the housing body includes a bottom wall and a side wall, the side wall is provided around the bottom wall, the side wall has one end connected to the bottom wall and the other end enclosing an opening, the end cover covers the opening, and the first wall is the bottom wall. The separator disposed between the electrode assembly and the first wall that is the bottom wall allows the separator to maintain support for the electrode assembly, and when thermal runaway occurs, the first portion of the separator can maintain support for the electrode assembly, thereby providing a passage for gas to be guided to the pressure relief mechanism.

According to a second aspect, an embodiment of this application provides a battery, including the battery cell according to any one of the embodiments of the first aspect.

According to a third aspect, an embodiment of this application provides an electric device, including the battery cell according to any one of the embodiments of the first aspect or the battery according to any one of the embodiments of the second aspect. The battery cell or the battery is configured to supply electrical energy to the electric device.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.
FIG. 1 is a schematic structural diagram of a vehicle according to some embodiments of this application.
FIG. 2 is an exploded view of a battery according to some embodiments of this application.
FIG. 3 is an exploded view of a battery cell according to some embodiments of this application.
FIG. 4 is a cross-sectional view of a battery cell according to some embodiments of this application.
FIG. 5 is a partially enlarged view of region A in FIG. 4.
FIG. 6 is a schematic structural diagram of a separator in FIG. 4.
FIG. 7 is a partially enlarged view of region B in FIG. 4.
FIG. 8 is a front view of a separator according to some embodiments of this application.
FIG. 9 is a schematic structural diagram of a separator according to some embodiments of this application.
FIG. 10 is a cross-sectional view of a separator according to some embodiments of this application.
FIG. 11 is a schematic structural diagram of a battery cell according to some embodiments of this application.
FIG. 12 is an exploded view of a housing and an electrode terminal according to some embodiments of this application.

Reference signs: 1. housing; 11. housing body; 111. first wall; 112. second wall; 113. third wall; 12. end cover; 1a. opening; 2. electrode assembly; 21. tab; 3. electrode terminal; 4. first insulating member; 5. second insulating member; 6. pressure relief mechanism; 7. separator; 711. first portion; 712. second portion; 721. first plate body; 7211. first surface; 7212. third through hole; 722. support member; 7221. support plate; 72211. second through hole; 723. second plate body; 7231. second surface; 7232. first through hole; 8. exhaust passage; 81. first exhaust passage; 811. cavity; 91. first gap; 92. slot; 10. battery cell; 20. box; 201. first box portion; 202. second box portion; 100. battery; 200. controller; 300. motor; and 1000. electric device.

### DESCRIPTION OF EMBODIMENTS

The following further describes implementations of this application in detail with reference to the accompanying drawings and embodiments. The detailed description of the embodiments and the accompanying drawings are intended to illustrate the principle of this application rather than to limit the scope of this application, meaning this application is not limited to the embodiments described herein.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, sequence or primary-secondary relationship of the technical features indicated.

Reference to "embodiment" in the specification means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may combine with another embodiment.

In the description of the embodiments of this application, unless otherwise specifically stated, the term "a plurality of" means more than two (inclusive). Similarly, "a plurality of groups" means more than two (inclusive) groups, and "a plurality of pieces" means more than two (inclusive) pieces.

In the description of the embodiments of this application, unless otherwise specified and defined explicitly, the technical terms "mounting", "connection", "join", and "attachment" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in the embodiments of this application as suitable to specific situations.

In this application, "a plurality of" means more than two (inclusive). Similarly, "a plurality of groups" means more than two (inclusive) groups, and "a plurality of pieces" means more than two (inclusive) pieces.

In the embodiments of this application, a battery cell may be a secondary battery. A secondary battery refers to a battery cell that can continue to be used after discharged because its active materials can be reactivated through recharging.

The battery cell includes but is not limited to a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, and a lead-acid battery.

The battery cell generally includes an electrode assembly. The electrode assembly includes a positive electrode, a negative electrode, and a separator. During a charge and discharge process of the battery cell, active ions (such as lithium ions) are intercalated and deintercalated between the positive electrode and the negative electrode. The separator is sandwiched between the positive electrode and the negative electrode to reduce the risk of short circuits between the positive and negative electrodes and allow active ions to pass through.

In some embodiments, the positive electrode may be a positive electrode plate, and the positive electrode plate may include a positive electrode current collector and a positive electrode active material provided on at least one surface of the positive electrode current collector.

In an example, the positive electrode current collector has two opposite surfaces in its thickness direction, and the positive electrode active material is disposed on either or both of the two opposite surfaces of the positive electrode current collector.

In an example, the positive electrode current collector may be a metal foil or a composite current collector. For example, for the metal foil, aluminum treated with silver surface, stainless steel treated with silver surface, stainless steel, copper, aluminum, nickel, carbon paste electrode, carbon, nickel, or titanium may be used. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (matrices such as polypropylene, polyethylene terephthalate, polybutylene terephthalate, polystyrene, or polyethylene).

In an example, the positive electrode active material may include at least one of the following materials: lithium-containing phosphate, lithium transition metal oxide, and respective modified compound thereof. However, this application is not limited to these materials, and may alternatively use other conventional materials that can be used as positive electrode active materials for batteries. One type of these positive electrode active materials may be used alone, or two or more of them may be used in combination. Examples of the lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), LiNi_{0.8}Co_{0.1}Mn_{0.1}O₂ (NCM811 for short), lithium nickel aluminum cobalt oxide (for example, LiNi_{0.85}Co_{0.15}Al_{0.05}O₂), and modified compounds thereof.

In some embodiments, the positive electrode may be a foam metal. The foam metal may be foam nickel, foam copper, foam aluminum, foam alloy, foam carbon, or the like. When a foam metal is used as the positive electrode, a surface of the foam metal may be provided with no positive electrode active material, and certainly, may alternatively be provided with a positive electrode active material. In an example, a lithium source material, potassium metal, or sodium metal may also be filled and/or deposited in the foam metal, and the lithium source material is a lithium metal and/or lithium-rich material.

In some embodiments, the negative electrode may be a negative electrode plate, and the negative electrode plate may include a negative electrode current collector.

In an example, the negative electrode current collector may be a metal foil, a foam metal, or a composite current collector. For example, for the metal foil, aluminum or stainless steel treated with silver surface, stainless steel, copper, aluminum, nickel, carbon paste electrode, carbon, nickel, titanium, or the like may be used. The foam metal may be foam nickel, foam copper, foam aluminum, foam alloy, or the like. The composite current collector may include a polymer material matrix and a metal layer. The composite current collector may be formed by forming a metal material (copper, copper alloy, nickel, nickel alloy, titanium, titanium alloy, silver, silver alloy, or the like) on a polymer material matrix (matrices such as polypropylene, polyethylene terephthalate, polybutylene terephthalate, polystyrene, or polyethylene).

In an example, the negative electrode plate may include a negative electrode current collector and a negative electrode active material provided on at least one surface of the negative electrode current collector.

In an example, the negative electrode current collector has two opposite surfaces in its thickness direction, and the negative electrode active material is disposed on either or both of the two opposite surfaces of the negative electrode current collector.

In an example, the negative electrode active material may be a well-known negative electrode active material used for batteries in the art. For example, the negative electrode active material may include at least one of the following materials: artificial graphite, natural graphite, soft carbon, hard carbon, a silicon-based material, a tin-based material, lithium titanate, and the like. The silicon-based material may be at least one selected from elemental silicon, silicon-oxygen compound, silicon-carbon composite, silicon-nitrogen composite, and silicon alloy. The tin-based material may be at least one selected from elemental tin, tin-oxygen compound, and tin alloy. However, this application is not limited to these materials, and may alternatively use other conventional materials that can be used as negative electrode active materials for batteries instead. One type of these negative electrode active materials may be used alone, or two or more of them may be used in combination.

In some embodiments, the material of the positive electrode current collector may be aluminum, and the material of the negative electrode current collector may be copper.

In some embodiments, the separator is a separation film. The separation film may be any well-known porous separation film with good chemical stability and mechanical stability.

In an example, a material of the separation film may include at least one of glass fiber, non-woven fabric, polyethylene, polypropylene, and polyvinylidene fluoride. The separation film may be a single-layer thin film or a multi-layer composite thin film. When the separation film is a multi-layer composite film, all layers may be made of same or different materials. The separator may be a separate component located between the positive and negative electrodes or may be attached to surfaces of the positive and negative electrodes.

In some embodiments, the separator is a solid electrolyte. The solid electrolyte is sandwiched between the positive electrode and the negative electrode, to transmit ions and isolate the positive and negative electrodes.

In some embodiments, the battery cell further includes an electrolyte, and the electrolyte conducts ions between the positive and negative electrodes. The electrolyte may be in a liquid state, a gel state, or a solid state. The liquid electrolyte includes an electrolytic salt and a solvent.

In some embodiments, the electrolytic salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone. The solvent may also be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether.

The gel electrolyte includes a polymer as a skeleton network of the electrolyte, paired with ionic liquid-lithium salt.

The solid electrolyte includes a polymer solid electrolyte, an inorganic solid electrolyte, or a composite solid electrolyte.

In an example, the polymer solid electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

In an example, the inorganic solid electrolyte may include one or more of an oxide solid electrolyte (crystalline perovskite, sodium superionic conductor, garnet, or amorphous LiPON film), a sulfide solid electrolyte (crystalline lithium superionic conductor (lithium germanium phosphorus sulfur or silver germanium sulfide ore) or amorphous sulfide), a halide solid electrolyte, a nitride solid electrolyte, and a hydride solid electrolyte.

In an example, the composite solid electrolyte is formed by adding an inorganic solid electrolyte filler to a polymer solid electrolyte.

In some embodiments, the electrode assembly is a wound structure. The positive electrode plate and the negative electrode plate are wound into a wound structure.

In some embodiments, the electrode assembly is a laminated structure.

In an example, a plurality of positive electrode plates and a plurality of negative electrode plates may be provided separately, and the plurality of positive electrode plates and the plurality of negative electrode plates are alternately stacked.

In an example, a plurality of positive electrode plates may be provided, the negative electrode plate is folded to form a plurality of stacked folding sections, and each positive electrode plate is sandwiched between adjacent folding sections.

In an example, both the positive electrode plate and the negative electrode plate are folded to form a plurality of stacked folding sections.

In an example, a plurality of separators may be provided and respectively sandwiched between any adjacent positive electrode plates or negative electrode plates.

In an example, the separator may be continuously provided and sandwiched between any adjacent positive electrode plates or negative electrode plates by folding or winding.

In some embodiments, a shape of the electrode assembly may be cylindrical, flat, multi-prismatic, or the like.

In some embodiments, the electrode assembly is provided with tabs, and the tabs may lead current out from the electrode assembly. The tabs include a positive tab and a negative tab.

In some embodiments, the battery cell may include an enclosure. The enclosure is configured to package components like the electrode assembly and electrolyte. The enclosure may be a steel, aluminum, plastic (such as polypropylene), or composite metal (such as copper-aluminum composite) shell, an aluminum-plastic film, or the like.

In an example, the battery cell may be a cylindrical battery cell, prismatic battery cell, pouch battery cell, or battery cell of another shape. Prismatic battery cells include square battery cells, blade battery cells, and multi-prismatic batteries, and multi-prismatic batteries are for example hexagonal batteries. This is not particularly limited in this disclosure.

The battery mentioned in the embodiments of this application refers to a single physical module that includes one or more battery cells for providing a higher voltage and capacity.

In some embodiments, the battery may be a battery module. When a plurality of battery cells are provided, the plurality of battery cells are arranged and fixed to form a battery module.

In some embodiments, the battery may be a battery pack. The battery pack includes a box and battery cells, with the battery cells or battery modules accommodated within the box.

In some embodiments, the box may be a part of a chassis structure of a vehicle. For example, a part of the box may be at least a part of the vehicle floor. Alternatively, a part of the box may be at least a part of the vehicle's cross members and roof rails.

In some embodiments, the battery may be an energy storage apparatus. Energy storage apparatuses include energy storage containers, energy storage cabinets, and the like.

For the development of battery technologies, many design factors need to be considered, for example, performance parameters such as energy density, cycle life, discharge capacity, and charge and discharge rate, as well as reliability of batteries.

To improve the reliability of a battery cell, a pressure relief mechanism may be provided on a housing of the battery cell, and when thermal runaway occurs in the battery cell, the pressure inside the battery cell is relieved through the pressure relief mechanism. To improve the insulation performance between an electrode assembly and the housing, a separator may be provided between the electrode assembly and the housing. After the separator is provided in the battery cell, to improve the timeliness of pressure relief of the pressure relief mechanism, an exhaust passage may be provided in the separator.

For a general battery cell, when thermal runaway occurs in the battery cell, the internal temperature of the battery cell is high, and the separator is easily affected by high temperature and melts, and after the separator melts, the exhaust passage will disappear; and no separator is present between the electrode assembly and the housing, which may cause direct contact of the electrode assembly with the housing, so the electrode assembly may block the pressure relief mechanism or affect the guiding of gas in the battery cell to the pressure relief mechanism; and the pressure and temperature in the battery cell cannot be released in time, making the pressure relief mechanism unable to work, and finally easily causing the risk of explosion and fire of the battery cell.

In view of this, embodiments of this application provide a technical solution, in which a melting point of at least a portion of the separator is set to be higher than that of another portion, and at least a portion of the exhaust passage is defined by the portion with higher melting point, so that when thermal runaway occurs in the battery cell, the portion with higher melting point can keep the exhaust passage unobstructed, thereby reducing the risk of explosion and fire of the battery cell and improving the reliability of the battery cell.

The technical solution described in the embodiments of this application is applicable to batteries and electric devices using a battery.

The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer.

For ease of description, the electric device being a vehicle is used as an example for the description of the following embodiments.

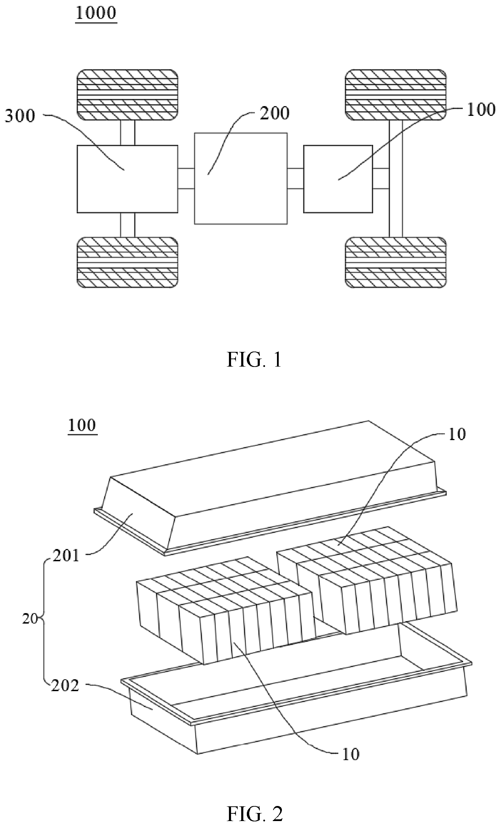

Referring to FIG. 1, FIG. 1 is a schematic structural diagram of a vehicle according to some embodiments of this application. The vehicle is provided with a battery 100 inside, where the battery 100 may be disposed at the bottom, front, or rear of the vehicle. The battery 100 may be configured to supply power to the vehicle 1000. For example, the battery 100 may be used as an operational power source for the vehicle.

The vehicle may further include a controller 200 and a motor 300, where the controller 200 is configured to control the battery 100 to supply power to the motor 300, for example, to satisfy power needs of start, navigation, and driving of the vehicle.

In some embodiments of this application, the battery 100 can be used as not only the operational power source for the vehicle but also a driving power source for the vehicle, replacing or partially replacing fossil fuel or natural gas to provide driving traction for the vehicle.

Referring to FIG. 2, FIG. 2 is an exploded view of a battery 100 according to some embodiments of this application. The battery 100 includes a box 20 and a battery cell 10, where the box 20 is configured to accommodate the battery cell 10.

The box 20 is an element for accommodating the battery cell 10, providing an accommodating space for the battery cell 10. The box 20 may be a variety of structures. In some embodiments, the box 20 may include a first box portion 201 and a second box portion 202. The first box portion 201 and the second box portion 202 fit together with one covering another to define an accommodating space for accommodating the battery cell 10. The first box portion 201 and the second box portion 202 may be of a variety of shapes, for example, cylinder or cuboid. The first box portion 201 may be a hollow structure with one side open, and the second box portion 202 may also be a hollow structure with one side open, where the open side of the second box portion 202 is engaged with the open side of the first box portion 201 so as to form the box 20 with the accommodating space. Alternatively, the first box portion 201 is a hollow structure with one side open, the second box portion 202 is a plate-shaped structure, and the second box portion 202 covers the open side of the first box portion 201 so as to form the box 20 with the accommodating space. The first box portion 201 and the second box portion 202 may be sealed by a sealing element, and the sealing element may be a sealing ring, a sealing adhesive, or the like.

In the battery 100, one or a plurality of battery cells 20 may be provided, and the plurality of battery cells 10 may be connected in series, parallel, or series-parallel, where being connected in series-parallel means a combination of series and parallel connections of the plurality of battery cells 10. It is possible that a plurality of battery cells 10 may be connected in series, parallel, or series-parallel first to form a battery module and then a plurality of battery modules are connected in series, parallel, or series-parallel to form an entirety which is accommodated in the box 20. It is also possible that all the battery cells 10 are directly connected in series, parallel, or series-parallel to form an entirety which is then accommodated in the box 20.

In some embodiments, the battery 100 may further include a busbar. The plurality of battery cells 10 may be electrically connected via the busbar, so that the plurality of battery cells 10 are connected in series, parallel, or series and parallel. The busbar may be a metal conductor, such as copper, iron, aluminum, stainless steel, and aluminum alloy.

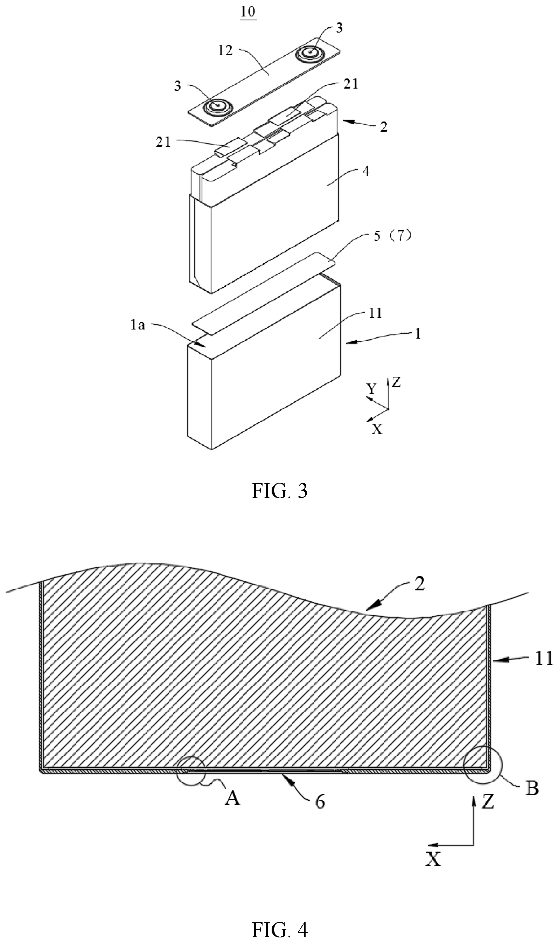

Referring to FIG. 3, FIG. 3 is an exploded view of a battery cell 10 according to some embodiments of this application. The battery cell 10 may include a housing 1 and an electrode assembly 2, where the electrode assembly 2 is accommodated in the housing 1.

In some embodiments, the housing 1 may include a housing body 11 and an end cover 12, where the housing body 11 has an opening 1a, and the end cover 12 closes the opening 1a of the housing body 11.

The housing body 11 is a component configured to accommodate the electrode assembly 2. The housing body 11 may be a hollow structure with an opening 1a formed at one end; or the housing body 11 may be a hollow structure with openings 1a formed at two opposite ends. The housing body 11 may be of a variety of shapes, for example, cylinder or cuboid. The housing body 11 may be made of various materials, such as copper, iron, aluminum, steel, and aluminum alloy.

The end cover 12 is a component that closes the opening 1a of the housing body 11 to isolate an internal environment of the battery cell 10 from an external environment. The end cover 12 and the housing body 11 together define an accommodating space for accommodating the electrode assembly 2, an electrolyte and other components. The end cover 12 may be connected to the housing body 11 by welding or crimping to close the opening 1a of the housing body 11. The shape of the end cover 12 may fit the shape of the housing body 11. For example, if the housing body 11 is a cuboid structure, the end cover 12 is a rectangular plate-shaped structure that fits the housing body 11. For another example, if the housing body 11 is a cylindrical structure, the end cover 12 is a circular plate-shaped structure that fits the housing body 11. The end cover 12 may also be made of various materials, such as copper, iron, aluminum, steel, and aluminum alloy. The end cover 12 and the housing body 11 may be made of same or different materials.

In the embodiment in which the housing body 11 has an opening 1a formed at one end, one end cover 12 may be provided correspondingly. In the embodiment in which the housing body 11 has openings 1a formed at two opposite ends, two end covers 12 may be provided correspondingly. The two end covers 12 respectively close the two openings 1a of the housing body 11, and the two end covers 12 and the housing body 11 together define the accommodating space.

In some embodiments, the battery cell 10 may further include electrode terminals 3, where the electrode terminals 3 are disposed on the housing 1, and the electrode terminals 3 are configured to be electrically connected to tabs 21 of the electrode assembly 2 to output electrical energy of the battery cell 10. The electrode terminals 3 may be provided on the housing body 11 of the housing 1 or on the end cover 12 of the housing 1. The electrode terminal 3 and the tab 21 may be directly connected, for example, the electrode terminal 3 is welded to the tab 21. The electrode terminal 3 and the tab 21 may alternatively be indirectly connected, for example, the electrode terminal 3 and the tab 21 are indirectly connected through a current collecting member. The current collecting member may be a metal conductor, such as copper, iron, aluminum, steel, and aluminum alloy.

In an example, as shown in FIG. 3, the housing body 11 has an opening 1a formed at one end, the housing 1 has one end cover 12, and one end cover 12 closes one opening 1a of the housing body 11. The end cover 12 is provided with two electrode terminals 3, where the two electrode terminals 3 are a positive electrode terminal 3 and a negative electrode terminal 3. A positive tab 21 and a negative tab 21 are formed at one end of the electrode assembly 2 facing the end cover 12. The positive electrode terminal 3 is connected to the positive tab 21 through one current collecting member, and the negative electrode terminal 3 is electrically connected to the negative tab 21 through another current collecting member.

In some embodiments, still referring to FIG. 3, the battery cell 10 may further include a first insulating member 4. The first insulating member 4 is a component that separates the housing body 11 and the electrode assembly 2. The first insulating member 4 achieves insulation and isolation between the housing body 11 and the electrode assembly 2. The first insulating member 4 is made of an insulating material, and the material of the first insulating member 4 includes but is not limited to plastic or rubber.

In an example, the first insulating member 4 covers an outer side of the electrode assembly 2 in a circumferential direction of the opening 1a of the housing body 11. There may be one or more electrode assemblies 2 in the housing 1. If there is one electrode assembly 2, the first insulating member 4 covers around the electrode assembly 2. If there are a plurality of electrode assemblies 2, the plurality of electrode assemblies 2 may be stacked in a thickness direction X of the electrode assembly 2. One electrode assembly 2 may be provided with one first insulating member 4 correspondingly, and each first insulating member 4 covers around one electrode assembly 2; or the plurality of electrode assemblies 2 may be used as a whole component, and the first insulating member 4 covers around the whole component.

In some embodiments, a second insulating member 5 may further be included, and the second insulating member 5 is provided on a side of the electrode assembly 2 facing away from the tab 21.

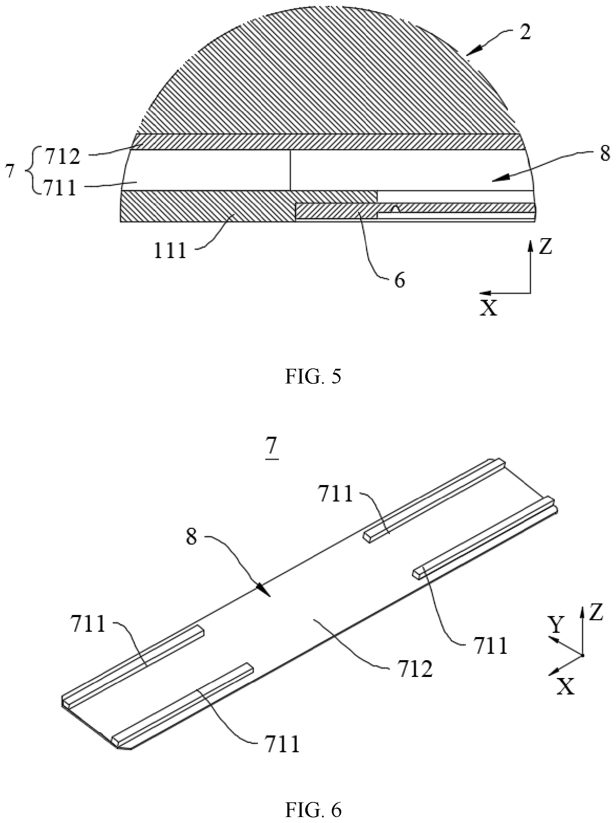

According to some embodiments of this application, referring to FIGs. 3 to 6, FIG. 4 is a cross-sectional view of a battery cell 10 according to some embodiments of this application, FIG. 5 is a partially enlarged view of region A in FIG. 4, and FIG. 6 is a schematic structural diagram of a separator 7 in FIG. 4. This application provides a battery cell 100, where the battery cell 10 includes a housing 1, a pressure relief mechanism 6, an electrode assembly 2, and a separator 7. The housing 1 has a first wall 111. The pressure relief mechanism 6 is provided on the housing 1. The electrode assembly 2 is provided in the housing 1. The separator 7 is provided between the electrode assembly 2 and the first wall 111, the separator 7 is configured to separate the electrode assembly 2 and the first wall 111, and the separator 7 is provided with an exhaust passage 8, where the exhaust passage 8 is configured to guide gas in the battery cell 10 to the pressure relief mechanism 6. The separator 7 includes a first portion 711 and a second portion 712, where a melting point of the first portion 711 is higher than a melting point of the second portion 712, and at least a portion of the exhaust passage 8 is defined by the first portion 711.

The pressure relief mechanism 6 is a component configured to relieve internal pressure of the battery cell 10. When internal pressure or temperature of the battery cell 10 reaches a threshold, the internal pressure of the battery cell 10 is relieved by the pressure relief mechanism 6. The pressure relief mechanism 6 may be provided on the first wall 111, or on a wall adjacent to or opposite the first wall 111 on the housing 1. The pressure relief mechanism 6 and the corresponding wall may be integrally formed, for example, an indentation groove may be provided on a wall of the housing 1 to form the pressure relief mechanism 6 in a region corresponding to the indentation groove on the wall. The pressure relief mechanism 6 and the corresponding wall may alternatively be separately provided, for example, a wall of the housing 1 is provided with a pressure relief hole, and the pressure relief mechanism 6 is mounted on the wall and covers the pressure relief hole, where the pressure relief mechanism 6 may be an explosion-proof sheet, a pressure relief valve, an installation valve, or the like mounted on the housing 1.

In the housing 1, there may be one or more first walls 111. It may be that the end cover 12 is the first wall 111, or at least one wall of the housing body 11 is the first wall 111. Taking the first wall 111 being located on the housing body 11 and the housing body 11 being of a cuboid shape as an example, the first wall 111 may be a wall of the housing body 11 in a width direction, a wall of the housing body 11 in a thickness direction, or a wall of the housing body 11 in a height direction, and at least one end of the housing body 11 in the height direction is formed with an opening 1a. In an example, in FIG. 4, the first wall 111 is a wall of the housing body 11 in the height direction; and in FIG. 3, a direction X is the width direction of the battery cell 10, a direction Y is the thickness direction of the battery cell 10, and a direction Z is the height direction of the battery cell 10.

The separator 7 is a component provided between the electrode assembly 2 and the first wall 111. The separator 7 may be made of an insulating material, or may be jointly defined by an insulating material and a conductive material. The separator 7 is configured to achieve insulation between the electrode assembly 2 and the first wall 111. In some embodiments, in the thickness direction of the first wall 111, the separator 7 may be partially located between the electrode assembly 2 and the first wall 111, for example, the separator 7 covers around the electrode assembly 2, and in this case, only a portion of the separator 7 is located between the electrode assembly 2 and the first wall 111. In an example, the first insulating member 4 serves as the separator 7. In some other embodiments, in the thickness direction of the first wall 111, the separator 7 is entirely located between the electrode assembly 2 and the first wall 111, and the separator 7 may be a plate-shaped structure. In an example, the second insulating member 5 serves as the separator 7.

The exhaust passage 8 refers to a passage that can guide gas in the battery cell 10 to the pressure relief mechanism 6. The exhaust passage 8 is provided on the separator 7. The exhaust passage 8 may be a passage that directly guides gas in the battery cell 10 to the pressure relief mechanism 6, and the exhaust passage 8 may alternatively be a passage that indirectly guides gas in the battery cell 10 to the pressure relief mechanism 6. The exhaust passage 8 may be an exhaust groove provided on the surface of the separator 7, where the exhaust groove may be provided on a surface of the separator 7 facing the first wall 111 or on a surface of the separator 7 facing the electrode assembly 2; the exhaust passage 8 may be a through hole penetrating the separator 7 in a thickness direction of the separator 7; or the exhaust passage 8 may be a passage formed inside the separator 7.

The first portion 711 of the separator 7 may be made of an insulating material or be a conductor; and the second portion 712 of the separator 7 may be made of an insulating material or be a conductor. A melting point of the first portion 711 is higher than a melting point of the second portion 712. It may be that both the first portion 711 and the second portion 712 will melt in a case of thermal runaway of the battery cell 10, where the second portion 712 melts prior to the first portion 711, and the exhaust passage 8 defined by the first portion 711 may remain unobstructed before the first portion 711 melts; it may be that the first portion 711 does not melt during thermal runaway due to its melting point and the second portion 712 may melt, during the melting of the second portion 712, the exhaust passage 8 defined by the first portion 711 always remains unobstructed, and the melting of the second portion 712 may increase the gas accommodating space between the electrode assembly 2 and the first wall 111, which is beneficial to exhaust of the exhaust passage 8; or it may be that neither the first portion 711 nor the second portion 712 melts during thermal runaway, and the first portion 711 and the second portion 712 jointly maintain the exhaust passage 8 defined by the separator 7 to keep the exhaust passage 8 unobstructed. Whether the first portion 711 and the second portion 712 melt is related to the internal temperature of the battery cell 10 and the materials of the first portion 711 and the second portion 712. Different materials are selected for defining the first portion 711 and the second portion 712 to produce the separator 7. The first portion 711 may be made of metal, mica, ceramic, soluble polytetrafluoroethylene, or the like, and the second portion 712 may be made of polyethylene, polypropylene, polyimide, polyethylene terephthalate, polycarbonate, or the like. In an example, the first portion 711 is made of ceramic, the second portion 712 is made of polyimide, at least a portion of the exhaust passage 8 is defined by the first portion 711, and when thermal runaway occur in the battery 100, the first portion 711 does not melt under the influence of high temperature, the second portion 712 melts, and the first portion 711 maintains the structure of the exhaust passage 8 defined by the first portion 711 to continue guiding gas in the battery cell 10 to the pressure relief mechanism 6.

At least a portion of the exhaust passage 8 being defined by the first portion 711 means that the exhaust passage 8 may be entirely defined by the first portion 711, or a portion of the exhaust passage 8 may be defined by the first portion 711.

In the foregoing battery cell 10, the separator 7 is located between the electrode assembly 2 and the first wall 111 of the housing 1, and the separator 7 is provided with the exhaust passage 8 for guiding gas in the battery cell 10 to the pressure relief mechanism 6. Considering that the melting point of the first portion 711 of the separator 7 is higher than the melting point of the second portion 712 of the separator 7, when thermal runaway occurs in the battery cell 10, the following may occur: if the melting point of the second portion 712 is insufficient for withstanding the high temperature during thermal runaway and the melting point of the first portion 711 is sufficient for withstanding the high temperature during thermal runaway, after the second portion 712 melts, the first portion 711 can remain located between the electrode assembly 2 and the first wall 111, and since at least a portion of the exhaust passage 8 is defined by the first portion 711, during melting of the second portion 712 and within a period of time after the second portion 712 completely melts, the exhaust passage 8 defined by the first portion 711 can maintain guiding gas in the battery cell 10 to the pressure relief mechanism 6; if the melting points of neither the second portion 712 nor the first portion 711 are sufficient for withstanding the high temperature during thermal runaway, the first portion 711 still melts later than the second portion 712, and during the process where the second portion 712 melts first, the exhaust passage 8 defined by the first portion 711 can provide a passage for gas in the battery cell 10 in thermal runaway to flow to the pressure relief mechanism 6, reducing the risk of explosion of the battery 100; and if both the first portion 711 and the second portion 712 can withstand the high temperature inside the battery cell 10 during thermal runaway, the exhaust passage 8 can always maintain guiding gas in the battery cell 10 to the pressure relief mechanism 6. In this way, in the case that the melting point of the first portion 711 on the separator 7 is higher than the melting point of the second portion 712 on the separator, the separator 7 helps to guide gas to the pressure relief mechanism 6 in a timely manner when thermal runaway occurs in the battery cell 10, reducing the risk that gas in the battery cell 10 is hindered from flowing to the pressure relief mechanism 6 due to melting of the separator 7 caused by thermal runaway, thereby improving the reliability of the battery 100.

In some embodiments, the melting point of the first portion 711 is higher than 300 degrees Celsius.

Since the melting point of the first portion 711 is higher than 300 degrees Celsius, when thermal runaway occurs in the battery cell 10, the first portion 711 does not melt at a temperature of 300 degrees Celsius, and within the time when the internal temperature of the battery 100 is less than or equal to 300 degrees Celsius, the first portion 711 can keep separating the electrode assembly 2 and the separator 7, and at the same time, the first portion 711 can keep the exhaust passage 8 defined by the first portion 711 unobstructed. Since the melting point of the second portion 712 is equal to or less than 300 degrees Celsius, when the temperature in the battery cell 10 is higher than 300 degrees Celsius, the second portion 712 will completely melt. The melting point of the first portion may be 304.4 degrees Celsius, 340 degrees Celsius, 488 degrees Celsius, 500 degrees Celsius, 600 degrees Celsius, 700 degrees Celsius, 1083.4 degrees Celsius, 1534.8 degrees Celsius, or the like.

The first portion 711 with the melting point higher than 300 degrees Celsius is used to define at least a portion of the exhaust passage 8, so that when thermal runaway occurs in the battery cell 10, the first portion 711 is not prone to melting caused by thermal runaway, and therefore the first portion 711 can maintain at least a portion of the exhaust passage 8 to continue guiding gas in the battery cell 10 to the pressure relief mechanism 6, reducing the risk of explosion and fire of the battery cell 10 due to the gas in the battery cell 10 not being able to be guided to the pressure relief mechanism 6.

In some embodiments, a material of the first portion 711 is metal, ceramic, or mica.

The material of the first portion 711 adopts a high-temperature resistant material, and the first portion 711 may be made of a non-insulating material, such as aluminum or iron; or the first portion may be made of an insulating material. When thermal runaway occurs in the battery cell 10, the first portion 711 can remain in solid state, so that the first portion 711 can maintain separation between the electrode assembly 2 and the first wall 111.

The material with a higher melting point allows the first portion 711 to maintain its original state when thermal runaway occurs in the battery cell 10, keeping at least a portion of the exhaust passage 8 unobstructed.

In some embodiments, the second portion 712 is an insulating material.

The second portion 712 being an insulating material helps the separator 7 insulate and isolate the electrode assembly 2 from the first wall 111.

In some embodiments, a material of the second portion 712 is polyethylene, polyimide, polyethylene terephthalate, or polycarbonate.

The second portion 712 being the foregoing materials allows the second portion 712 to melt when thermal runaway occurs, increasing the gas accommodating space between the electrode assembly 2 and the first wall 111.

In some embodiments, in a thickness direction of the first wall 111, a projected area of the first portion 711 is smaller than a projected area of the separator 7.

That the projected area of the first portion 711 is smaller than the projected area of the separator 7 may be that a sum of a projected area of the second portion 712 and the projected area of the first portion 711 is larger than or equal to the projected area of the separator 7. In an example, after removing a projection of the first portion 711 from a projection of the separator 7, the remaining portion may be a projection of the second portion 712. When thermal runaway occurs in the battery cell 10, the second portion 712 may not melt, and the first portion 711 and the second portion 712 keep the exhaust passage 8 unobstructed; or the second portion 712 melts, and a new exhaust gap is formed between the electrode assembly 2 and the first wall 111 by the melted portion of the separator 7.

The projected area of the first portion 711 is set to be smaller than the projected area of the separator 7, so that at least a portion of a projection of the separator 7 in the thickness direction of the first wall 111 is defined by the first portion 711, and when the second portion 712 melts due to its insufficient melting point for withstanding the high temperature of thermal runaway, the remaining first portion 711 of the separator 7 can have larger exhaust space, improving the exhaust capability of the space between the electrode assembly 2 and the first wall 111.

In some embodiments, in the thickness direction of the first wall 111, at least a portion of a projection of the pressure relief mechanism 6 does not overlap with a projection of the first portion 711.

In the thickness direction of the first wall 111, when the pressure relief mechanism 6 is provided on a wall adjacent to the first wall 111, the pressure relief mechanism 6 does not overlap with the first portion 711; and when the pressure relief mechanism 6 is located on the first wall 111, in the thickness direction of the first wall 111, the first portion 711 is located between the pressure relief mechanism 6 and the electrode assembly 2, and the projection of the first portion 711 and the projection of the pressure relief mechanism 6 do not overlap means that the first portion 711 can remain abutting between the first wall 111 and the electrode assembly 2 with no contact with the pressure relief mechanism 6 when thermal runaway occurs.

The projection of the pressure relief mechanism 6 is set to not overlap with the projection of the first portion 711, that is, no position of the first portion 711 is in contact with the pressure relief mechanism 6, so that when thermal runaway occurs, the first portion 711 can remain between the first wall 111 and the electrode assembly 2, reducing the risk that the first portion 711 is discharged out of the pressure relief mechanism 6 with the airflow, thereby allowing the first portion 711 to stay between the first wall 111 and the electrode assembly 2 to keep the exhaust passage 8 unobstructed, and the first portion 711 is not disposed on the pressure relief mechanism 6, reducing the risk that the first portion 711 blocks the pressure relief mechanism 6 and affects the normal exhaust of the pressure relief mechanism 6.

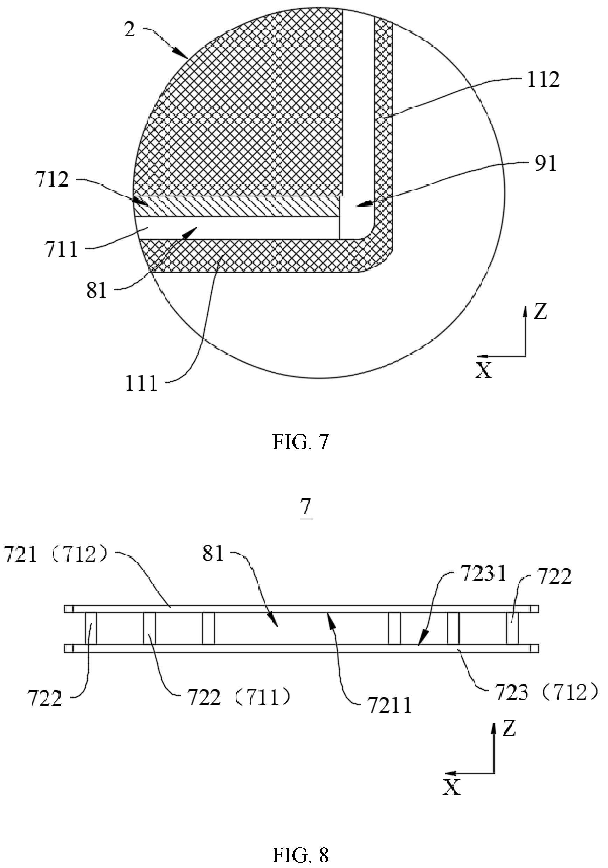

In some embodiments, referring to FIG. 7, FIG. 7 is a partially enlarged view of region B in FIG. 4. The housing 1 has a second wall 112 provided adjacent to the first wall 111, the separator 7 is plate-shaped, and a first gap 91 is formed between an edge of the separator 7 and an inner surface of the second wall 112; and the exhaust passage 8 includes a first exhaust passage 81, where the first exhaust passage 81 extends to the edge of the separator 7 to communicate the first gap 91 with the pressure relief mechanism 6, and the first portion 711 defines the first exhaust passage 81.

The second wall 112 is a wall adjacent to the first wall 111 on the housing 1. Taking the housing body 11 having an opening 1a at one end and being in a cuboid shape as an example, the first wall 111 may a wall of the housing body 11 opposite the opening 1a, and the second wall 112 may be a wall of the housing body 11 adjacent to the opening 1a; or the first wall 111 may be a wall of the housing body 11 adjacent to the opening 1a, and the second wall 112 may be a wall of the housing body 11 facing away from the opening 1a or may be the end cover 12.

The first gap 91 refers to a gap between the second wall 112 and the separator 7 through which gas can pass, and there may be one or more first gaps 91. In an example, the first wall 111 is a wall of the housing body 11 opposite the opening 1a, the first wall 111 is a wall of the housing body 11 adjacent to the opening 1a, the separator 7 is provided on the first wall 111, and the first gap 91 is formed between the second wall 112 and the separator 7.

The first exhaust passage 81 refers to a passage provided on the separator 7 and capable of guiding gas in the battery cell 10 to the pressure relief mechanism 6. The first exhaust passage 81 may be provided on two surfaces of the separator 7 in the thickness direction of the first wall 111, or the first exhaust passage 81 may penetrate the separator 7. The first exhaust passage 81 communicates with the first gap 91.

The first exhaust passage 81 being defined by the first portion 711 means that when thermal runaway occurs in the battery 100, the first exhaust passage 81 can maintain its shape, thereby continuing to guide gas to the pressure relief mechanism 6.

The first gap 91 provided between the separator 7 and the second wall 112 and the first exhaust passage 81 extending to the edge of the separator 7 communicating with the first gap 91 allow gas in the battery cell 10 to enter the first exhaust passage 81 through the first gap 91, and thus be guided to the pressure relief mechanism 6 through the first exhaust passage 81, which realizes guiding the gas inside the battery cell 10 to the pressure relief mechanism 6, reducing the risk that gas inside the battery cell 10 cannot be guided to the pressure relief mechanism 6.

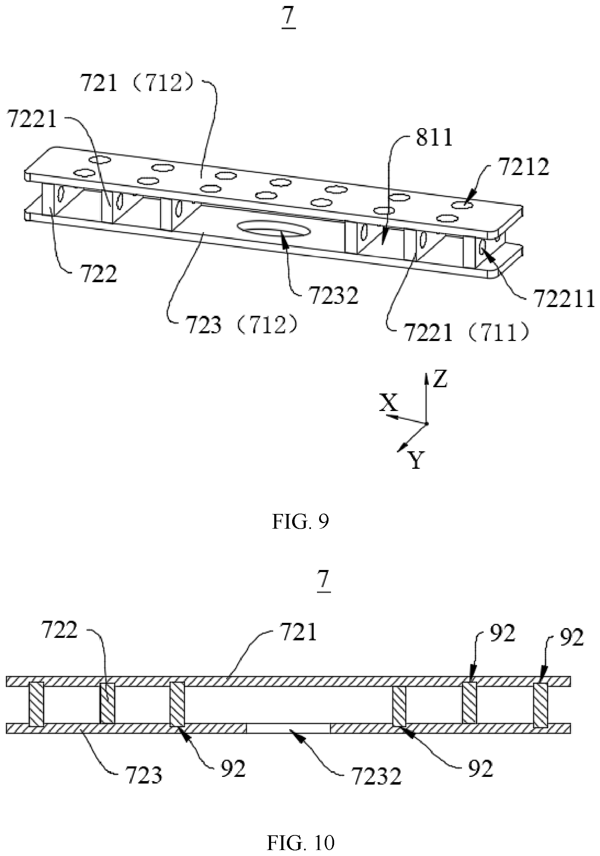

In some embodiments, referring to FIGs. 8 and 9, FIG. 8 is a front view of a separator 7 according to some embodiments of this application, and FIG. 9 is a schematic structural diagram of a separator 7 according to some embodiments of this application. The second portion 712 includes a first plate body 721, the first plate body 721 has a first surface 7211 facing the first wall 111, the first portion 711 includes a plurality of support members 722, and the plurality of support members 722 are spaced apart from each other on the first surface 7211.

The melting point of the first plate body 721 is lower than the melting point of the support member 722, the first plate body 721 is located between the support members 722 and the electrode assembly 2, and when thermal runaway occurs, after the first plate body 721 melts, the plurality of support plates 7221 jointly support the electrode assembly 2.

The support member 722 may be a conductor or an insulating material. In an example, the support member 722 is metal, and the support member 722 is disposed between the first plate body 721 and the first wall 111.

The plurality of support members 722 being spaced apart from each other means that any two support members 722 are not in contact with each other. The plurality of support members 722 may be arranged along the direction X or along the direction Y. A gap is present between adjacent support members 722, and the gap may be the exhaust passage 8.

The plurality of support members 722 of the first portion 711 are located between the first plate body 721 and the first wall 111, the plurality of support members 722 are spaced apart from each other, and exhaust gaps are formed between the plurality of support members 722 to facilitate the exhaust of the separator 7, so that when the second portion 712 melts due to heat, the first portion 711 can maintain the support for the electrode assembly 2 and the first wall 111 to keep the exhaust passage 8 unobstructed.

In some embodiments, the second portion 712 further includes a second plate body 723, the second plate body 723 is disposed on a side of the first plate body 721 facing the first wall 111, and the plurality of support members 722 are disposed between the first plate body 721 and the second plate body 723 and connect the first plate body 721 and the second plate body 723.

The melting point of the second plate body 723 is lower than the melting point of the support member 722. Both the second plate body 723 and the first plate body 721 are defined by the second portion 712. The melting point of the second plate body 723 being the same as the melting point of the first plate body 721 or the melting point of the second plate body 723 being different from the melting point of the first plate body 721 is not limited. The second plate body 723 has a second surface 7231 facing the first plate body 721, and the support member 722 is connected to the second surface 7231. The support member 722 is disposed between the second plate body 723 and the first plate body 721. The passage formed between the first plate body 721, the second plate body 723, and the plurality of support members 722 may serve as the exhaust passage 8.

The first plate body 721 and the second plate body 723 provided on two sides of the support member 722 respectively allow for more stable structure of the support member 722, so that when thermal runaway occurs, the separator can form a more stable exhaust passage 8, reducing the risk that the support member 722 collapses or shifts due to unstable setting of the support member 722, which otherwise affects the unobstructed flow in the exhaust passage 8.

It should be noted that, in a case that no first plate body 721 is provided, a second plate body 723 may be provided between the support members 722 and the first wall 111, and the second plate body 723 may be an insulating material.

In some embodiments, the exhaust passage 8 further includes a first through hole 7232 provided in the second plate body 723, the first through hole 7232 penetrates the second plate body 723 along a thickness direction, the first through hole 7232 corresponds in position to the pressure relief mechanism 6, and the first through hole 7232 communicates with the first exhaust passage 81.

The first through holes 7232 may be provided in one or plurality, and when the first through holes 7232 is provided in plurality, any one of the first through holes 7232 communicates with the pressure relief mechanism 6.

The first through hole 7232 corresponding in position to the pressure relief mechanism 6 means that when the pressure relief mechanism 6 is located on the first wall 111, in the thickness direction of the second plate body 723, a projection of the first through hole 7232 covers the projection of the pressure relief mechanism 6.

The first through hole 7232 is set as corresponding to the pressure relief mechanism 6, so that when airflow in the battery cell 10 passes through the exhaust passage 8, the airflow can flow to the pressure relief mechanism 6 through the first through hole 7232, thereby reducing the risk that the second plate body 723 blocks the pressure relief mechanism 6.

In some embodiments, the support members 722 are support plates 7221, the plurality of support plates 7221 are spaced apart along a first direction perpendicular to the thickness direction of the first wall 111, a cavity 811 is formed between adjacent two of the support plates 7221, the support members 722 are provided with second through holes 72211, the second through holes 72211 communicate with the cavities 811, and the second through holes 72211 and the cavities 811 form the first exhaust passage 81.

Any two adjacent support plates 7221 are not in contact with each other, the cavities 811 formed between adjacent support plates 7221 communicate through the second through holes 72211, and the first exhaust passage 81 communicates with the first gap 91. It may be that each support plate 7221 is provided with a second through hole 72211, or some support members 722 are provided with a second through hole 72211, and some support members 722 are provided with no through hole. The support member 722 is disposed in the first direction, the first direction may be the direction X, and the second through hole 72211 may be provided in the first direction and communicate with the cavity 811, or provided in the direction Y and indirectly communicate with the cavity 811.

The second through hole 72211 may be a circular, square, irregular, or the like, a plurality of second through holes 72211 may be provided in one support plate 7221, and the shapes of any two square holes may be the same or different.

The first through hole 7232 provided in the support member 722 allows the second through holes 72211 to communicate with the cavities 811, so that gas in the battery cell 10 can flow to the pressure relief mechanism 6 through circulation in the first through hole 7232 and the cavities 811, thus reducing the risk of obstruction to gas circulation inside the battery cell 10.

In some embodiments, referring to FIG. 10, FIG. 10 is a cross-sectional view of a separator 7 according to some embodiments of this application. A side of the first plate body 721 facing the second plate body 723 and/or a side of the second plate body 723 facing the first plate body 721 is provided with slots 92, and at least one end of the support plate 7221 is embedded in the slot 92.

It may be that the first surface 7211 is provided with slots 92 and the second surface 7231 is provided with no slot 92, that the first surface 7211 is provided with no slot 92 and the second surface 7231 is provided with slot 92s, or that both the first surface 7211 and the second surface 7231 are provided with slots 92. The support plate 7221 may have one end embedded in the slot 92 or both ends embedded in the slots 92.

At least one end of the support plate 7221 being embedded in the slot 92 allows for more stable installation of the support plate 7221, reducing the risk that the exhaust passage 8 is blocked due to displacement or collapse of the support plate 7221.

In some embodiments, the exhaust passage 8 further includes third through holes 7212 provided in the first plate body 721, the third through hole 7212 penetrates the first plate body 721 in a thickness direction of the first plate body 721, and the third through hole 7212 communicates with the first exhaust passage 81.

The thickness direction of the first plate body 721 may be the direction Z, and the third through hole 7212 penetrates the first plate body 721 and communicates with the cavity 811 between two adjacent support plates 7221.

Gas in the electrode assembly 2 and in contact with a surface of the first plate body 721 to pass through can enter the first exhaust passage 81 through the third through holes 7212, increasing the paths for gas to enter the first exhaust passage 81 and reducing the risk that gas in the battery cell 10 is hindered from flowing to the pressure relief mechanism 6.

In some embodiments, the pressure relief mechanism 6 is provided on the first wall 111.

The pressure relief mechanism 6 is provided on the first wall 111, the separator 7 is provided on the first wall 111, the pressure relief mechanism 6 is provided close to the exhaust passage 8, and the separator 7 separates the pressure relief mechanism 6 and the electrode assembly 2.

The pressure relief mechanism 6 is provided on the first wall 111, and the separator 7 is located between the electrode assembly 2 and the pressure relief mechanism 6, so that when thermal runaway occurs, the first portion 711 of the separator 7 keeps the exhaust passage 8 between the pressure relief mechanism 6 and the electrode assembly 2 unobstructed, thereby realizing guiding gas in the battery cell 10 to the pressure relief mechanism 6.

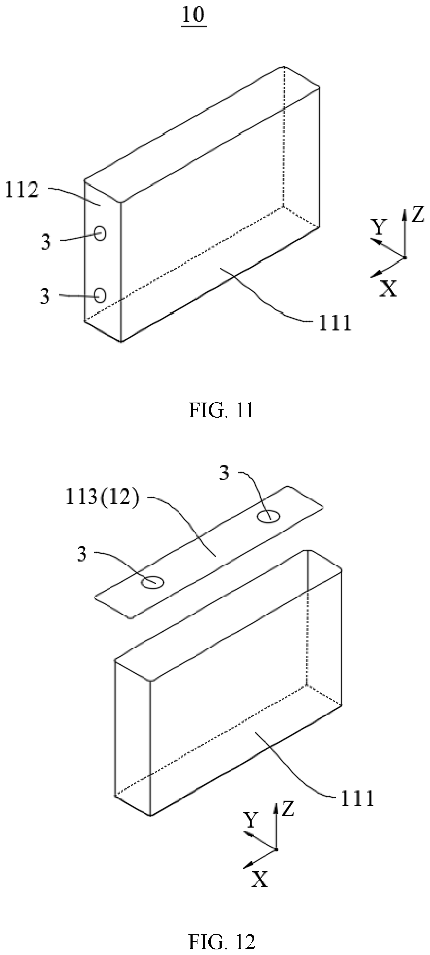

In some embodiments, referring to FIG. 11, FIG. 11 is a schematic structural diagram of a battery cell 10 according to some embodiments of this application. The battery cell 10 includes electrode terminals 3, the housing 1 has a second wall 112 provided adjacent to the first wall 111, and the electrode terminals 3 are provided on the second wall 112.

The second wall 112 is a wall adjacent to the first wall 111. When the first wall 111 is a wall of the housing body 11 opposite the opening 1a, the second wall 112 may be a wall of the housing body 11 adjacent to the opening 1a. When the first wall 111 is a wall of the housing body 11 adjacent to the opening 1a, the second wall 112 may be the end cover 12 or a wall of the housing body 11 opposite the opening 1a. The first wall 111 and the second wall 112 being provided adjacent to each other means that the electrode terminal 3 and the pressure relief mechanism 6 are provided adjacent to each other. The second wall 112 may be provided in plurality, and the electrode terminal 3 may be provided in two, where the two electrode terminals 3 may be provided on different second walls 112. In an example, the first wall 111 is a wall of the housing body 11 opposite the opening 1a, the second wall 112 is a wall of the housing body 11 adjacent to the opening 1a, and the electrode terminals 3 are provided on the second wall 112.

The electrode terminals 3 provided adjacent to the pressure relief mechanism 6 can reduce the influence of the pressure relief mechanism 6 on the electrode terminal 3 during pressure relief.

In some embodiments, referring to FIG. 12, FIG. 12 is an exploded view of a housing 1 and an electrode terminal 3 according to some embodiments of this application. The battery cell 10 includes electrode terminals 3, the housing 1 has a third wall 113 provided opposite the first wall 111, and the electrode terminals 3 are provided on the third wall 113.

The electrode terminals 3 and the pressure relief mechanism 6 are provided opposite each other on different walls of the housing 1. In an example, the first wall 111 is a wall of the housing body 11 opposite the opening 1a, the third wall 113 is the end cover 12, and the electrode terminals 3 are provided on the end cover 12.

The electrode terminals 3 provided opposite the pressure relief mechanism 6 can reduce the influence of the pressure relief mechanism 6 on the electrode terminal 3 during pressure relief.

In some embodiments, the first wall 111 is disposed facing downward when the battery cell 10 is placed in an electric device 1000 or the battery 100.

The first wall 111 being disposed facing downward means that the pressure relief mechanism 6 is disposed facing downward, which means that when the battery cell 10 is in actual use, the first wall 111 is disposed facing the gravity direction.

The pressure relief mechanism 6 disposed facing downward allows for downward exhaust of the pressure relief mechanism 6, so that when the battery cell 10 is applied to the electric device 1000 or the battery 100, the influence of the pressure relief mechanism 6 during pressure relief on other components located above the pressure relief mechanism 6 is reduced.

In some embodiments, the housing 1 includes a housing body 11 and an end cover 12, the housing body 11 includes a bottom wall and a side wall, the side wall is provided around the bottom wall, the side wall has one end connected to the bottom wall and the other end enclosing an opening 1a, the end cover 12 covers the opening 1a, and the first wall 111 is the bottom wall.

The first wall 111 is the bottom wall, the separator 7 is provided on the bottom wall, and the pressure relief mechanism 6 may be provided on the side wall, on the end cover 12, or on the bottom wall. In an example, the pressure relief mechanism 6 is provided on the bottom wall, the electrode terminals 3 are provided on the end cover 12, and the separator 7 is provided between the pressure relief mechanism 6 and the electrode assembly 2.

The separator 7 disposed between the electrode assembly 2 and the first wall 111 that is the bottom wall allows the separator 7 to maintain support for the electrode assembly 2, and when thermal runaway occurs, the first portion 711 of the separator 7 can maintain support for the electrode assembly 2, thereby providing a passage for gas to be guided to the pressure relief mechanism 6.

In some embodiments, the separator 7 is a bottom support plate.

According to some embodiments of this application, this application provides a battery cell 10. The battery cell 10 includes a housing 1, an electrode assembly 2, a pressure relief mechanism 6, a separator 7, and electrode terminals 3. The housing 1 includes a housing body 11 and an end cover 12. One end of the housing body 11 has an opening 1a, and the end cover 12 covers the opening 1a of the housing body 11. The electrode assembly 2 and the separator 7 are disposed in the housing body 11. A wall of the housing body 11 facing away from the opening 1a is a first wall 111, and a wall of the housing body 11 adjacent to the opening 1a is a second wall 112. The separator 7 is disposed between the electrode assembly 2 and the first wall 111, and a first gap 91 is formed between the separator 7 and the second wall 112. The pressure relief mechanism 6 is disposed on the first wall 111. The electrode terminals 3 are disposed on the end cover 12. The separator 7 includes a first plate body 721, a second plate body 723, and a plurality of support plates 7221. The support plates 7221 are configured to connect the first plate body 721 and the second plate body 723. The first plate body 721 is located between the electrode terminals 3 and the support plates 7221. The second plate body 723 is located between the support plates 7221 and the first wall 111. The second plate body 723 is provided with a first through hole 7232 communicating with the pressure relief mechanism 6, and the first through hole 7232 communicates with the pressure relief mechanism 6. The plurality of support plates 7221 are spaced apart from each other along a direction X between the first plate body 721 and the second plate body 723. A cavity 811 is formed between adjacent two of the support plates 7221. Second through holes 72211 communicating with the cavities 811 are provided in the support plate 7221. The cavities 811 communicates with the first gap 91 through the through holes. The first plate body 721 and the second plate body 723 are the second portion 712, the support plates 7221 are the first portion 711, and a melting point of the first portion 711 is higher than a melting point of the second portion 712. In an example, the first portion 711 is metal copper, and the second portion 712 is polyimide.

Although this application has been described with reference to the preferred embodiments, various modifications can be made to this application without departing from the scope of this application and the components therein can be replaced with equivalents. In particular, as long as there is no structural conflict, the various technical features mentioned in some embodiments can be combined in any manner. This application is not limited to the specific embodiments disclosed in this specification but includes all technical solutions falling in the scope of the claims.

## Claims

1. A battery cell, comprising:
a housing, having a first wall;
a pressure relief mechanism, provided on the housing;
an electrode assembly, provided in the housing; and
a separator, provided between the electrode assembly and the first wall, wherein the separator is configured to separate the electrode assembly and the first wall, the separator is provided with an exhaust passage, and the exhaust passage is configured to guide gas in the battery cell to the pressure relief mechanism;
wherein the separator comprises a first portion and a second portion, a melting point of the first portion is higher than a melting point of the second portion, and at least a portion of the exhaust passage is defined by the first portion.

2. The battery cell according to claim 1, wherein the melting point of the first portion is higher than 300 degrees Celsius.

3. The battery cell according to claim 1 or 2, wherein a material of the first portion is metal, ceramic, or mica.

4. The battery cell according to any one of claims 1 to 3, wherein the second portion is an insulating material.

5. The battery cell according to claim 4, wherein a material of the second portion is polyethylene, polyimide, polyethylene terephthalate, or polycarbonate.

6. The battery cell according to any one of claims 1 to 5, wherein in a thickness direction of the first wall, a projected area of the first portion is smaller than a projected area of the separator.

7. The battery cell according to any one of claims 1 to 6, wherein in the thickness direction of the first wall, at least a portion of a projection of the pressure relief mechanism does not overlap with a projection of the first portion.

8. The battery cell according to any one of claims 1 to 7, wherein the housing has a second wall provided adjacent to the first wall, the separator is plate-shaped, and a first gap is formed between an edge of the separator and an inner surface of the second wall; and
the exhaust passage comprises a first exhaust passage, wherein the first exhaust passage extends to the edge of the separator to communicate the first gap with the pressure relief mechanism, and the first portion defines the first exhaust passage.

9. The battery cell according to claim 8, wherein the second portion comprises a first plate body, the first plate body has a first surface facing the first wall, the first portion comprises a plurality of support members, and the plurality of support members are spaced apart from each other on the first surface.

10. The battery cell according to claim 9, wherein the second portion further comprises a second plate body, the second plate body is disposed on a side of the first plate body facing the first wall, and the plurality of support members are disposed between the first plate body and the second plate body and connect the first plate body and the second plate body.

11. The battery cell according to claim 10, wherein the exhaust passage further comprises a first through hole provided in the second plate body, the first through hole penetrates the second plate body along a thickness direction, the first through hole corresponds in position to the pressure relief mechanism, and the first through hole communicates with the first exhaust passage.

12. The battery cell according to claim 10 or 11, wherein the support members are support plates, the plurality of support plates are spaced apart along a first direction perpendicular to the thickness direction of the first wall, a cavity is formed between adjacent two of the support plates, the support members are provided with second through holes, the second through holes communicate with the cavities, and the second through holes and the cavities form the first exhaust passage.

13. The battery cell according to claim 12, wherein a side of the first plate body facing the second plate body and/or a side of the second plate body facing the first plate body is provided with slots, and at least one end of the support plate is embedded in the slot.

14. The battery cell according to any one of claims 9 to 13, wherein the exhaust passage further comprises third through holes provided in the first plate body, the third through hole penetrates the first plate body in a thickness direction of the first plate body, and the third through hole communicates with the first exhaust passage.

15. The battery cell according to any one of claims 1 to 14, wherein the pressure relief mechanism is provided on the first wall.

16. The battery cell according to claim 15, wherein the battery cell comprises electrode terminals, the housing has a second wall provided adjacent to the first wall, and the electrode terminals are provided on the second wall.

17. The battery cell according to claim 15, wherein the battery cell comprises electrode terminals, the housing has a third wall provided opposite the first wall, and the electrode terminals are provided on the third wall.

18. The battery cell according to any one of claims 1 to 17, wherein the first wall is disposed facing downward when the battery cell is placed in an electric device or a battery.

19. The battery cell according to any one of claims 1 to 18, wherein the housing comprises a housing body and an end cover, the housing body comprises a bottom wall and a side wall, the side wall is provided around the bottom wall, the side wall has one end connected to the bottom wall and the other end enclosing an opening, the end cover covers the opening, and the first wall is the bottom wall.

20. A battery, comprising the battery cell according to any one of claims 1 to 19.

21. An electric device, comprising the battery cell according to any one of claims 1 to 19 or the battery according to claim 20, wherein the battery cell or the battery is configured to supply electrical energy to the electric device.
